# EUROPEAN PATENT APPLICATION

(11) **EP 4 578 730 A1**
(43) Date of publication of application: **02.07.2025**
(21) Application number: 24818644.7
(22) Date of filing: 04.06.2024
(51) Int. Cl.: B60P 7/15, B60P 9/00

(54) **CANTILEVER SHAFT ASSEMBLY AND CARRYING AND FEEDING VEHICLE**

(30) Priority: 09.06.2023 CN 202321474624 U
(71) Applicant: Hangzhou Hikrobot Co., Ltd., Hangzhou, Zhejiang 310051 (CN)
(72) Inventor: ZHANG, Lingkai, Hangzhou, Zhejiang 310051 (CN)
(74) Representative: Yang, Shu
(86) International application number: PCT/CN2024/097295
(87) International publication number: WO 2024/251112

(57) **Abstract**

A cantilever shaft assembly, including an assembly body (10), a swing plate (20), a cantilever shaft (30) and a pitch adjustment mechanism (40), wherein a top end of the swing plate (20) is hinged to the assembly body (10); the cantilever shaft (30) is perpendicular to the swing plate (20), and one end of the cantilever shaft (30) is fixed on the swing plate (20); the pitch adjustment mechanism (40) includes a driving unit (41), a linkage mechanism (43) and a push rod (433); the driving unit (41) is arranged on the assembly body (10); a first end of the linkage mechanism (43) is connected to the driving unit (41); a second end of the linkage mechanism(43) is hinged to a first end of the push rod (433); and a second end of the push rod (433) is configured to push the swing plate (20) to swing relative to a vertical state. The cantilever shaft assembly facilitates the pitch adjustment of the cantilever shaft. Further disclosed is a handling and feeding vehicle including the cantilever shaft assembly.

## Description

The present application claims the priority to a Chinese patent application 202321474624.8 filed with the China National Intellectual Property Administration (CNIPA) on June 9, 2023 and entitled "CANTILEVER SHAFT ASSEMBLY AND HANDLING AND FEEDING VEHICLE", which is incorporated herein by reference in its entirety.

### Technical Field

The present application relates to the technical field of a mobile robot, in particular to a cantilever shaft assembly and a handling and feeding vehicle.

### Background

A handling and feeding vehicle is a robot that can move autonomously without human intervention, which is widely applied in large facilities such as factories and warehouses. A cantilever shaft assembly is a component of the handling and feeding vehicle for transporting materials. However, at present, a cantilever shaft of the cantilever shaft assembly of the handling and feeding vehicle is not convenient for pitch adjustment, resulting in the inability to dock directly with a docking machine station of a target apparatus, and thus resulting in that the material can only be handled via transportation after the material is transported to a target position by the handling and feeding vehicle, which leads to low efficiency of material handling.

### Summary

In view of this, embodiments of the present application provide a cantilever shaft assembly and a handling and feeding vehicle which can facilitate the pitch adjustment of a cantilever shaft.

To achieve the above purpose, the embodiments of the present application adopt the following technical solutions.

An embodiment of the present application provides a cantilever shaft assembly, including an assembly body, a swing plate, a cantilever shaft and a pitch adjustment mechanism; a top end of the swing plate is hinged to the assembly body; the cantilever shaft is perpendicular to the swing plate, and an end of the cantilever shaft is fixed on the swing plate; the pitch adjustment mechanism includes a driving unit, a linkage mechanism and a push rod; the driving unit is arranged on the assembly body, a first end of the linkage mechanism is connected to the driving unit, a second end of the linkage mechanism is hinged to a first end of the push rod, and a second end of the push rod is configured to push the swing plate to swing relative to a vertical state.

According to a specific implementation of the embodiment of the present application, the assembly body includes a mounting plate, and the top end of the swing plate is hinged to the mounting plate.

According to a specific implementation of the embodiment of the present application, the linkage mechanism includes a swing rod and a first connecting rod; a first end of the swing rod is connected to the driving unit, a second end of the swing rod is hinged to a first end of the first connecting rod, and a second end of the first connecting rod is hinged to the first end of the push rod.

According to a specific implementation of the embodiment of the present application, the linkage mechanism includes a swing rod, a first connecting rod and a movable connecting base; a first end of the swing rod is connected to the driving unit, a second end of the swing rod is hinged to a first end of the first connecting rod, the first connecting rod is perpendicular to the movable connecting base, and a second end of the first connecting rod is hinged to a first end of the movable connecting base, a second end of the movable connecting base is hinged to the first end of the push rod.

According to a specific implementation of the embodiment of the present application, a swing range of the swing plate relative to the vertical state is determined by a size of a material, a weight of a material and a length of the cantilever shaft.

According to a specific implementation of the embodiment of the present application, the swing range of the swing plate relative to the vertical state is -5° to 6°; preferably, the swing range of the swing plate relative to the vertical state is -3° to 3°.

According to a specific implementation of the embodiment of the present application, a swing limit mechanism of the swing plate is arranged between the swing plate and the mounting plate.

According to a specific implementation of the embodiment of the present application, the swing limit mechanism includes a limit rod and a first limit member; a first end of the limit rod is connected to the swing plate, and a second end of the limit rod is connected to the first limit member after passing through a through-hole on the mounting plate.

According to a specific implementation of the embodiment of the present application, the swing limit mechanism further includes a second limit member which is arranged on the limit rod; the second limit member and the first limit member are respectively located at both sides of the mounting plate, and there is a preset limit distance between the second limit member and the first limit member.

According to a specific implementation of the embodiment of the present application, the pitch adjustment mechanism further includes an inclination sensor and a control unit; the inclination sensor is arranged on the cantilever shaft and located at an end of the cantilever shaft away from the mounting plate, the inclination sensor is electrically connected to the control unit, and the control unit is electrically connected to the driving unit.

According to a specific implementation of the embodiment of the present application, the driving unit includes a motor and a reducer which are provided integrally, the motor is connected to the reducer, and the first end of the linkage mechanism is connected to an output shaft of the reducer.

According to a specific implementation of the embodiment of the present application, the assembly body further includes a material pushing mechanism for pushing a material suspended from the cantilever shaft.

In a second aspect, an embodiment of the present application provides a handling and feeding vehicle, including a vehicle body and a cantilever shaft assembly; wherein an assembly body of the cantilever shaft assembly is arranged on the vehicle body; wherein the cantilever shaft assembly is any cantilever shaft assembly described in the first aspect.

The cantilever shaft assembly and the handling and feeding vehicle provided in the embodiments of the present application include an assembly body, a swing plate, a cantilever shaft and a pitch adjustment mechanism; a top end of the swing plate is hinged to the assembly body; the cantilever shaft is perpendicular to the swing plate, and an end of the cantilever shaft is fixed on the swing plate; the pitch adjustment mechanism includes a driving unit, a linkage mechanism and a push rod; the driving unit is arranged on the assembly body, a first end of the linkage mechanism is connected to the driving unit, a second end of the linkage mechanism is hinged to a first end of the push rod, and a second end of the push rod is configured to push the swing plate to swing relative to the vertical state. By pushing the swing plate relative to the vertical state through the push rod, the cantilever shaft fixed on the swing plate can swing relative to a horizontal state, so as to realize the pitch adjustment of the cantilever shaft.

### Brief Description of the Drawings

The accompanying drawings described herein are used to provide a further understanding of the present application and constitute part of the present application. The illustrative embodiments of the present application and their descriptions are used to explain the present application and do not constitute an improper limitation on the present application.
Fig. 1 is a schematic structure diagram of a cantilever shaft assembly in an embodiment of the present application;
Fig. 2 is a cutaway view of the cantilever shaft assembly in the embodiment of the present application (a drag chain mechanism is not shown);
Fig. 3 is a schematic exploded structure diagram of the cantilever shaft assembly shown in Fig. 1;
Fig. 4 is a schematic diagram of docking of a cantilever shaft assembly with a docking machine station in an embodiment of the present application;
Fig. 5 is a schematic structure diagram of the cantilever shaft assembly in the embodiment of the present application in a backside view;
Fig. 6 is a bottom view of the cantilever shaft assembly in the embodiment of the present application;
Fig. 7 is a schematic motion diagram of the cantilever shaft assembly in the embodiment of the present application in a front view;
Fig. 8 is a motion schematic diagram of the cantilever shaft assembly in the embodiment of the present application in a bottom view;
Fig. 9a is a schematic diagram of a connecting structural between a cantilever shaft and a material pushing mechanism in the cantilever shaft assembly shown in Fig. 1;
Fig. 9b is a schematic exploded structure diagram of the embodiment shown in Fig. 9a.

### Reference signs:

cantilever shaft assembly 100; assembly body 10; mounting plate 11; threaded hole 12; circular arc connecting base 13; swing plate 20; connecting part 21; hinged shaft 22;
cantilever shaft 30; cantilever shaft flange 31;
pitch adjustment mechanism 40; driving unit 41; motor 411; reducer 412; output shaft 42; linkage mechanism 43; swing rod 431; first connecting rod 432; push rod 433; inclination sensor 44; movable connecting base 45; fixed connecting base 46;
swing limit mechanism 50; second limit member 51; limit rod 52; first limit member 53;
material pushing mechanism 60; push rod base 61; material pushing rod 62; sliding motor 63; guide rail 64; first connecting flange 64a; second connecting flange 64b; sliding block 65; connecting plate 66; hinged point 67; material pushing ring 68; material pushing rod driving unit 69; drag chain mechanism 70;
vehicle body 200; bracket 210; vehicle chassis 220; docking machine station 300; docking shaft 310; material tray A.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

### Embodiment 1

The handling and feeding vehicle is a kind of Automated Guided Vehicle (AGV), and includes three main components: a vehicle body, a material pushing mechanism and a cantilever shaft assembly. The cantilever shaft assembly is a cantilever shaft assembly provided in the embodiment of the present application, which is arranged on the vehicle body. The material pushing mechanism for pushing a material suspended from the cantilever shaft is also included on the vehicle body. The vehicle body may further include a variety of sensors and navigation systems, to obtain information about the surrounding environment and enable autonomous navigation.

The handling and feeding vehicle works based on synergy of the cantilever shaft assembly, the material pushing mechanism and the body. In some examples, an assembly body of the cantilever shaft assembly is located on the vehicle body and the material is suspended from the assembly body, and the material pushing mechanism is responsible for pushing the material suspended from the cantilever shaft. In the process of carrying, the handling and feeding vehicle can automatically adjust the speed and direction according to different characteristics of the carried materials and ensure the safety of the materials during transport, can effectively improve the efficiency of logistics operations and reduce labor costs, and is an indispensable and important device in the modern logistics industry.

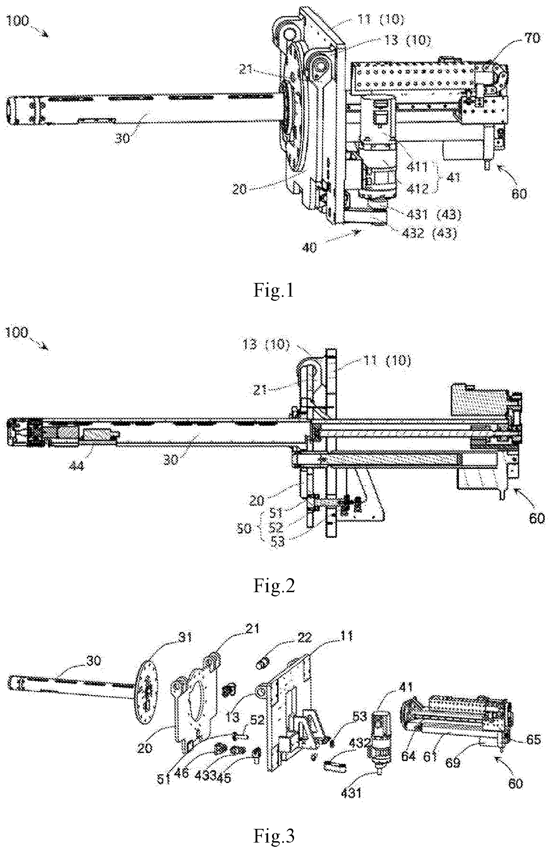

Referring to Figs. 1 to 3, an embodiment of the present application provides a cantilever shaft assembly 100, including an assembly body 10, a swing plate 20, a cantilever shaft 30 and a pitch adjustment mechanism 40. A top end of the swing plate 20 is hinged to the assembly body 10; the cantilever shaft 30 is perpendicular to the swing plate 20, and an end of the cantilever shaft 30 is fixed on the swing plate 20; the pitch adjustment mechanism 40 includes a driving unit 41, a linkage mechanism 43 and a push rod 433; the driving unit 41 is arranged on the assembly body 10, a first end of the linkage mechanism 43 is connected to the driving unit 41, a second end of the linkage mechanism 43 is hinged to a first end of the push rod 433, and a second end of the push rod 433 is configured to push the swing plate 20 to swing relative to a vertical state.

The assembly body 10 is configured to arrange the swing plate 20, the cantilever shaft 30, and the pitch adjustment mechanism 40 thereon.

In some examples, the assembly body 10 is also a portion for mounting and fixing, of the cantilever shaft assembly 100, which is configured to connect the cantilever shaft assembly 100 with an apparatus which uses the cantilever shaft assembly 100, such as the handling and feeding vehicle.

In an embodiment, as shown in Figs. 1-3, the assembly body 10 may further include a material pushing mechanism 60 configured to push the material suspended from the cantilever shaft 30.

In some examples, the material pushing mechanism 60 is mainly configured to push the material suspended from an unloader (such as the handling and feeding vehicle with an unloading function), and can be driven by a hydraulic or pneumatic system, to automate the operation. The material pushing mechanism may include a material pushing rod and a push rod base. The material pushing rod can be connected to the cantilever shaft 30 through a connecting rod. When the material pushing rod moves forward, the material pushing rod will push the material suspended from the cantilever shaft 30 to the material unloading station. The push rod base is configured to support the material pushing rod to ensure that the material pushing rod can move smoothly.

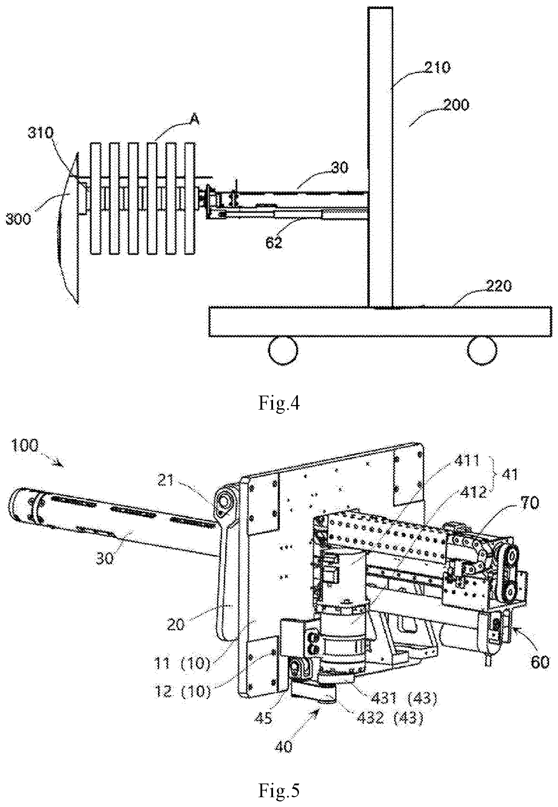

Specifically, in some examples, after the cantilever shaft 30 has been docked with a docking machine station of a target apparatus, the material pushing mechanism pushes the material suspended from the cantilever shaft 30 to the docking machine station of the target apparatus, so as to complete the transfer of the material. In the case that the unloader is the handling and feeding vehicle, as shown in Fig. 4, a vehicle body 200 includes a bracket 210 and a vehicle chassis 220. The cantilever shaft assembly 100 is arranged at the bracket 210, and the cantilever shaft 30 extends out of the bracket 210, and the vehicle chassis 220 simultaneously drives the bracket 210 and the cantilever shaft assembly 100 to move for material handling.

As shown in Fig. 4, the docking machine station 300 is provided with a docking shaft 310 oriented to the outside. The docking shaft 310 is coaxially docked with the cantilever shaft 30. The material tray A (i.e. the material to be transferred) is hanged from the cantilever shaft 30 of the cantilever shaft assembly 100 before being transferred. With the material pushing rod 62 of the material pushing mechanism 60 of the cantilever shaft assembly 100, the material tray A is pushed out of the cantilever shaft 30 and hanged from the docking shaft 310. Fig. 4 shows the case in which the material tray A is pushed to the docking shaft 310.

In the above process, the material pushing mechanism can work in cooperation with the cantilever shaft 30 and an adjusting rod, a adjusting nut and a limit switch on the assembly body 10 to ensure the accuracy and stability of the material unloading process. The material pushing mechanism can push the material suspended from the cantilever shaft 30 to the material unloading station, and the adjusting rod, the adjusting nut, the limit switch, etc., are configured to adjust and limit a movement range of each component to ensure the normal operation of the whole system. The specific structure of the material pushing mechanism 60 is referred to the detailed description later in the present application.

As shown in Figs. 1 to 3 and 5, in an embodiment, the assembly body 10 may further include a mounting plate 11.

The mounting plate 11 is configured to implement the mounting and fixing function of the assembly body 10. In some examples, the mounting plate 11 may be provided with threaded holes 12 to enable the mounting plate 11 to be connected to the apparatus which uses the cantilever shaft assembly 100. In this case, the cantilever shaft assembly 100 is fixed to the apparatus which uses the cantilever shaft assembly 100 by means of connections of screws with the threaded holes 12.

An angle between the swing plate 20 and the assembly body 10 can be adjusted by the swing plate 20.

In some examples, the assembly body 10 of the cantilever shaft assembly 100 is fixed to the apparatus which uses the cantilever shaft assembly 100. Therefore, an angle between the swing plate 20 and the apparatus which uses the cantilever shaft assembly 100 can actually be further adjusted by the swing plate 20.

In an embodiment, the top end of the swing plate 20 is hinged to the assembly body 10, that is, swinging of the swing plate 20 is realized by hinging of the swing plate 20 to the assembly body 10. In some examples, a connecting base is formed at a position of the assembly body 10 corresponding to the top end of the swing plate 20, and the top end of the swing plate 20 is hinged to the connecting base, so that the swing plate 20 can swing around the assembly body 10.

As shown in Fig. 1, as an alternative embodiment, the assembly body 10 may further include a mounting plate 11, and the top end of the swing plate 20 is hinged to the mounting plate 11.

Specifically, in some examples, the top of the mounting plate 11 is arranged with one or more circular arc connecting bases 13. The top of the swing plate 20 is arranged with one or more connecting parts 21 accordingly. A connecting part 21 is composed of two oppositely arranged circular arc connecting plates, and a circular arc connecting base 13 is located between the two oppositely arranged circular arc connecting plates of the connecting part 21. The top of the swing plate 20 can be connected to the top of the mounting plate 11 through hinged connection of the hinged shaft 22.

In some examples, the mounting plate 11 is fixed to the apparatus which uses the cantilever shaft assembly 100, in which case a first side of the mounting plate 11 may be affixed to the apparatus which uses the cantilever shaft assembly 100, and the top of the swing plate 20 is hinged to a second side of the mounting plate 11. The first side of and the second side of the mounting plate 11 are opposite sides.

In an embodiment, a swing limit mechanism 50 of the swing plate 20 is arranged between the swing plate 20 and the mounting plate 11.

A back surface (a side surface towards the mounting plate 11) of the swing plate 20 is equipped with the swing limit mechanism 50. The swing limit mechanism 50 can ensure that the swing of the swing plate 20 will not exceed a safe range by limiting a swing angle of the swing plate 20, so as to prevent the collision between the swing plate 20 and the mounting plate 11, and to effectively avoid the problems such as noise, metal dust and so on.

As shown in Fig. 2, in an embodiment, the swing limit mechanism 50 includes a limit rod 52 and a first limit member 53; a first end of the limit rod 52 is connected to the swing plate 20, and a second end of the limit rod 52 is connected to the first limit member 53 after passing through a through-hole on the mounting plate 11.

The material of the first limit member 53 can be rubber, polyethylene, polyurethane foam, etc., so as to achieve the shock absorption and noise reduction.

In some examples, the diameter of the through-hole allows the limit rod 52 to move freely in the left and right directions while adjusting heights at which the left and right ends of the limit rod 52 are located, to adapt to the situation in which the first end of the limit rod 52 swings upward together with the swinging of the swing plate 20 upward relative to the vertical state.

The limit rod 52 is connected to the back surface of the swing plate 20. With the movement of the swinging plate 20, the limit rod 52 drives the first limit member 53 to move at the back surface side of the mounting plate 11 (with a side surface towards the swing plate 20 being a front surface), and the first limit member 53 will abut against the back surface of the mounting plate 11 before the swinging plate 20 swings beyond a safe swing range, to realize the limit function and ensure the safe and stable operation of the device. The moving distance and position of the limit rod 52 can be designed and adjusted appropriately to achieve an accurate limit effect.

As shown in Fig. 2, in an embodiment, the swing limit mechanism 50 further includes a second limit member 51 which is arranged on the limit rod 52. The second limit member 51 and the first limit member 53 are respectively located on both sides of the mounting plate 11, and there is a preset limit distance between the second limit member 51 and the first limit member 53.

Of course, the second limit member 51 can further be arranged on the swing plate 20.

In some examples, the first limit member 53 is located at the back surface side of the mounting plate 11, and the second limit member 51 is located at the front surface side of the mounting plate 11; the preset limit distance between the second limit member 51 and the first limit member 53 can be determined by appropriate design and adjustment, to achieve an accurate limit effect.

When the limit rod 52 drives, with the movement of the swing plate 20, the first limit member 53 to move at the back surface side of the mounting plate 11, the first limit member 53 will abut against the back surface of the mounting plate 11 before the swinging plate 20 swings upward beyond the safe swing range; when the limit rod 52 drives, with the movement of the swing plate 20, the second limit member 51 to move at the front surface side of the mounting plate 11, the second limit member 51 will abut against the front surface of the mounting plate 11 before the swinging plate 20 swings downward beyond the safe swing range, so as to realize the limit function and to ensure the safe and stable operation of the device.

The cantilever shaft 30 is a key component for carrying and handling materials. In some examples, when the apparatus using the assembly has handled the material to a specified position, the material pushing mechanism pushes the material from the cantilever shaft 30 to the docking machine station of the target apparatus. The material is a material tray with a through-hole in the center of the material tray. The cantilever shaft 30 passes through the through-hole, and the material pushing mechanism pushes the material tray to slide along the cantilever shaft 30 to the docking machine station of the target apparatus.

**In** an embodiment, the cantilever shaft 30 is perpendicular to the swing plate 20 and an end of the cantilever shaft 30 is fixed to the swing plate 20. For example, as shown in Figs. 1 and 3, the cantilever shaft 30 is fixedly mounted on the swing plate 20 through a cantilever shaft flange 31.

Making the cantilever shaft 30 perpendicular to the swing plate 20 may improve the stiffness and stability of the cantilever shaft 30 to the maximum extent. This allows the cantilever shaft 30 to better withstand the load and reduces vibration, thus improving the reliability and performance of the device.

In an embodiment, the swing range of the swing plate relative to the vertical state may be determined by the size of the material, the weight of the material, and the length of the cantilever shaft. Specifically, the swing range of the swing plate 20 relative to the vertical state can be calculated based on the deformation formula in material mechanics in combination with the size of the material, the weight of the material and the length of the cantilever shaft.

In an embodiment, the swing range of the swing plate relative to the vertical state is -5° to 6°; preferably, the swing range of the swing plate 20 relative to the vertical state is -3° to 3°. Since an end of the cantilever shaft 30 is fixed to the swing plate 20, the swing range of the swing plate 20 relative to the vertical state is a swing range of the cantilever shaft 30.

In the process of unloading material by the apparatus which uses the cantilever shaft assembly 100, if the swing angle range of the cantilever shaft 30 is too large, the material unloading speed and material unloading accuracy for the material will be affected. In order to effectively reduce the error, the present embodiment optimizes the swing range through repeated experiments to ensure the stability and reliability of the material unloading while improving the material unloading efficiency and material unloading accuracy.

The cantilever shaft 30 will generate a bending moment when carrying and transporting the material, which results in that the cantilever shaft 30 is deformed and cannot dock with the docking machine station of the target apparatus.

The pitch adjustment mechanism is configured to adjust an up and down swing angle of the cantilever shaft 30 relative to the horizontal state, to balance the deformation generated from the cantilever shaft 30. In some examples, by the adjustment of the pitch adjustment mechanism, the cantilever shaft 30 can successfully dock with the docking machine station of the target apparatus, and successfully transfer the material to the docking machine station.

As shown in Figs. 3, 5 and 6, in an embodiment, the pitch adjustment mechanism 40 includes the driving unit 41, the linkage mechanism 43 and the push rod 433.

The driving unit 41 is a component providing a driving force in the pitch adjustment mechanism 40, and a housing of the driving unit 41 is arranged with a through-hole. An output shaft of the driving unit 41 can pass through the through-hole to be exposed out of the housing and is hinged to the linkage mechanism 43.

In an embodiment, the driving unit 41 is arranged on the assembly body 10.

In some examples, in order to mount and fix the driving unit 41, at least one mounting hole needs to be preset in the side of the assembly body 10, and at least one connecting hole whose number corresponds to the number of the at least one mounting hole, needs to be preset in the side of the driving unit 41. The positions of these connecting holes need to correspond to positions of these mounting holes, to ensure that the driving unit 41 can be properly mounted on the assembly body 10. The driving unit 41 can be fixed to the side of the assembly body 10 by using screw threads, which can make the mounting more robust and reliable.

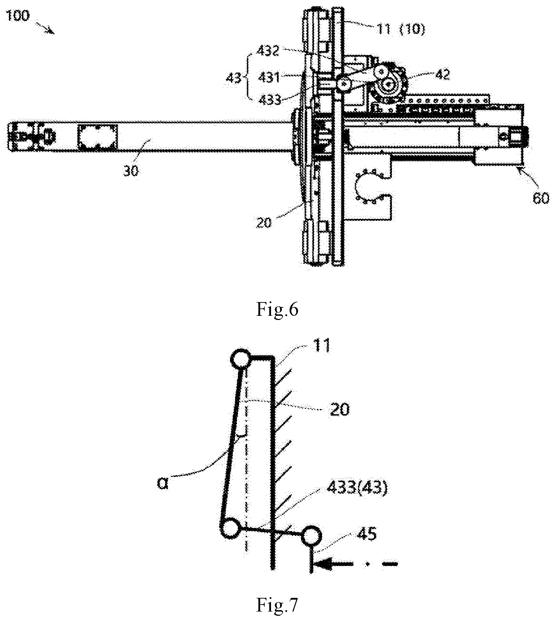

As an alternative embodiment, as shown in Figs. 5 and 6, the driving unit 41 includes a motor 411 and a reducer 412 which are provided integrally. The motor 411 is connected to the reducer 412, and the first end of the linkage mechanism 43 is connected to an output shaft 42 of the reducer 412.

In this way, a high speed and low torque output from the motor 411 can be transformed into a low speed and high torque to be output, and a speed of the output shaft is enabled to be adjusted, making it suitable for different speed requirements. At the same time, the motor 411 and the reducer 412 are mounted in the same housing, which can reduce the number of components and the mounting space, to make the whole system more compact. Further, since docks between the motor 411 and the reducer 412 are reduced, the number of components that may fail such as connecting points and bolts, can be reduced, thereby improving the reliability of the system.

In some examples, the motor 411 and the reducer 412 may be connected with each other via a coupling (not shown in the figure). The coupling includes two half-couplings connected with each other via a center shaft, and the motor shaft and the reducer shaft can be connected to the half-couplings respectively.

The linkage mechanism 43 is a mechanism that can transform a rotational motion into a straight line motion to allow a more stable and smoother transfer of energy. On the other hand, compared to other transmission mechanisms such as a gear transmission, a component contact area of the linkage mechanism 43 is smaller, thus reducing friction and wear of mechanical components. In addition, the linkage mechanism 43 can further realize angle conversion, which makes the pitch adjustment mechanism 40 more flexible and able to adapt to the requirements of energy transfer under different angles, so as to improve the accuracy and stability of the pitch adjustment mechanism 40 while increasing the flexibility and adaptability of the pitch adjustment mechanism 40.

In an embodiment, the first end of the linkage mechanism 43 is connected to the driving unit 41. In this way, a rotational torque output by the driving unit 41 will be transmitted to the first end of the linkage mechanism 43 connected to the driving unit 41. According to the operation principle of the linkage mechanism 43, the rotational torque will be transformed into a straight line motion, which then will be transferred to another mechanism connected to the linkage mechanism 43, thereby enabling the energy transfer to be more stable and smooth, and enabling the accuracy and stability of the pitch adjustment mechanism 40 to be improved.

As an alternative embodiment, the linkage mechanism 43 includes a swing rod 431 and a first connecting rod 432; a first end of the swing rod 431 is connected to the driving unit 41, a second end of the swing rod 431 is hinged to a first end of the first connecting rod 432, and a second end of the first connecting rod 432 is hinged to a first end of the push rod 433.

As shown in Figs. 5 and 6, specifically, the rotational torque output by the driving unit 41 will be transferred to the swing rod 431 connected to the driving unit 41, and the swing rod 431 will start to rotate around its hinged point under the action of the rotational torque. At this time, the other end of the swing rod 431 will also move along with it, and transfer energy to the first connecting rod 432 hinged to the swing rod 431. After receiving the energy, the first connecting rod 432 starts to move in a straight line motion manner and transfers the energy to the push rod 433 hinged to the first connecting rod 432, and then the energy is transferred to a mechanism being driven via the push rod 433.

The push rod 433 is a component that plays a pushing role in the pitch adjustment mechanism 40 and consists of a rod whose two ends are connected to the linkage mechanism 43 and the swing plate 20 respectively. Under the driving of the linkage mechanism 43, the push rod 433 can drive the swing plate 20 to swing. The cooperative usage of the push rod 433 and the linkage mechanism 43 can enable the pitch adjustment mechanism 40 to transform between the rotational motion and the straight line motion, so that the mechanical system has higher accuracy and stability. At the same time, the push rod 433 can also be designed and adjusted to adapt to different opearating conditions and requirements.

As shown in Fig. 7, in an embodiment, the second end of the linkage mechanism 43 is hinged to the first end of the push rod 433, the second end of the push rod 433 is configured to push the swing plate 20 to swing relative to the vertical state. In this way, after the rotational torque output from the driving unit 41 is transferred to the linkage mechanism 43, the linkage mechanism 43 starts to move and transfers the energy to the push rod 433 hinged to the linkage mechanism 43, to enable the push rod 433 to be pushed forward with the movement of the linkage mechanism 43, and transfer the pushing force to the swing plate 20 via the second end of the push rod 433. Under the action of the pushing force, the swing plate 20 starts to swing around a support point (hinged point) of the swing plate 20 in the vertical direction.

As shown in Fig. 7, an angle α of the swing plate 20 relative to the vertical state can range from -5° to 6°. When the length of the cantilever shaft is determined, the specific value of the angle α can be designed and adjusted according to different load weight conditions. When the load weight is larger, the specific value of the angle α increases. When the load weight is smaller, the specific value of the angle α decreases accordingly. Specifically, the angle α of the swing plate 20 relative to the vertical state is calculated based on the deformation formula in material mechanics in combination with the size of the material, the weight of the material and the length of the cantilever shaft.

**In** addition, in the process of designing the push rod 433, the length, shape, material and other factors of the push rod 433 need to be considered, to ensure that the push rod 433 can exert the best pushing effect under different operating conditions. **In** some examples, according to the properties of trigonometric functions, there is a certain correspondence between the length of the push rod 433 and the swing angle range of the swing plate 20. This correspondence can be changed by adjusting the length of the push rod 433, thus to adjust swing angle range of the swing plate 20. **In** this way of adjustment, the motion characteristics of the pitch adjustment mechanism 40 can be very accurately controlled, improving the accuracy and stability of the pitch adjustment mechanism 40, and adapting the pitch adjustment mechanism 40 to different operating conditions and requirements.

In order to improve the stability and accuracy of the pitch adjustment mechanism 40, in some examples, the second end of the push rod 433 is fixedly connected to the swing plate 20. Compared with the second end of the push rod 433 merely abutting against the swing plate 20, the second end of the push rod 433 being fixedly connected to the swing plate 20 can avoid the error caused by the friction between the push rod 433 and the swing plate 20 which would result in the decrease of the accuracy of the system; further, when the second end of the push rod 433 is fixedly connected to the swing plate 20, the force transferred from the push rod 433 is more stable and the motion state of the system can be better controlled. The second end of the push rod 433 is fixedly connected to the swing plate 20 by a fixed connecting base 46.

In the process of transportation, the load weight will cause deformation of the cantilever shaft 30, which will affect the operating effect of the pitch adjustment mechanism 40. To solve this issue, as shown in Fig. 2, in an embodiment, the pitch adjustment mechanism 40 also includes an inclination sensor 44 and a control unit (not shown in the figure); the inclination sensor 44 is arranged on the cantilever shaft 30 and is located at one end of the cantilever shaft 30 away from the mounting plate 11; the inclination sensor 44 is electrically connected to the control unit, and the control unit is electrically connected to the driving unit 41. As shown in Fig. 2, the inclination sensor 44 can be set inside the cantilever shaft 30.

In this way, the pitch adjustment mechanism 40 can be automatically adjusted by the cooperation usage of the inclination sensor 44 and the control unit. The inclination sensor 44 is mounted on the cantilever shaft 30 at one end of the cantilever shaft 30 away from the mounting plate 11, and transmits real-time inclination data to the control unit by monitoring an inclination angle of the cantilever shaft 30. The control unit is electrically connected to the driving unit 41, and can adjust the output of the driving unit 41 according to data fed back by the inclination sensor 44, so as to automatically adjust the pitch angle of the cantilever shaft 30, to enable the cantilever shaft 30 to accurately dock with the docking machine station of the target apparatus for material unloading. By this way of automatic adjustment, the trouble and inaccuracy for manually adjusting the cantilever shaft 30 can be effectively avoided.

In order to achieve high-accuracy adjustment of pitch angle and inclination angle, as an alternative embodiment, the inclination sensor 44 is a high-accuracy inclination sensor 44. By improving the control accuracy of the inclination sensor 44, the pitch angle of the cantilever shaft 30 can be accurately detected to achieve the accurate control of the pitch adjustment mechanism 40. In this way, even if the cantilever shaft 30 is loaded with a larger load, high-accuracy adjustment of pitch angle and inclination angle can be achieved by improving the control accuracy of the inclination sensor 44.

The cantilever shaft assembly 100 provided in the embodiment of the present application includes the assembly body 10, the swing plate 20, the cantilever shaft 30 and the pitch adjustment mechanism 40; the top end of the swing plate 20 is hinged to the assembly body 10; the cantilever shaft 30 is perpendicular to the swing plate 20, and an end of the cantilever shaft 30 is fixed to the swing plate 20; the pitch adjustment mechanism 40 includes the driving unit 41, the linkage mechanism 43 and the push rod 433; the driving unit 41 is arranged on the assembly body 10, the first end of the linkage mechanism 43 is connected to the driving unit 41, the second end of the linkage mechanism 43 is hinged to the first end of the push rod 433, and the second end of the push rod 433 is configured to push the swing plate 20 to swing relative to the vertical state. By pushing the swing plate 20 relative to the vertical state through the push rod 433, the cantilever shaft 30 fixed on the swing plate 20 can be allowed to swing relative to the horizontal state, so as to realize the pitch adjustment of the cantilever shaft 30.

In some examples, the cantilever shaft assembly 100 is mounted on the handling and feeding vehicle for carrying and handling the material and feeding the target apparatus. Since the cantilever shaft assembly 100 can realize the pitch adjustment of the cantilever shaft 30, when the cantilever shaft 30 is carried with a material, the cantilever shaft assembly 100 can effectively balance the bending of the cantilever shaft 30 caused by the load, to enable the cantilever shaft assembly 100 to be directly docked with the docking machine station of the target apparatus, thereby improving the efficiency of material handling.

### Embodiment 2

The structure of the present embodiment is basically the same as that of Embodiment 1, the difference between the present embodiment and Embodiment 1 is that, in the present embodiment, the linkage mechanism 43 includes a swing rod 431, a first connecting rod 432 and a movable connecting base 45; a first end of the swing rod 431 is connected to a driving unit 41, a second end of the swing rod 431 is hinged to a first end of the first connecting rod 432, the first connecting rod 432 is perpendicular to the movable connecting base 45, and a second end of the first connecting rod 432 is hinged to a first end of the movable connecting base 45, and a second end of the movable connecting base 45 is hinged to a first end of the push rod 433.

The first end of the swing rod 431 can be hinged or fixed to the driving unit 41.

The shape of the movable connecting base 45 is similar to a lifting lug, and the movable connecting base 45 includes a bottom plate and two hinged plates. Both sides of the bottom plate are respectively fixed connected to the first ends of the hinged plates, and the second ends of the two hinged plates are respectively provided with through-holes through which a hinged shaft passes, so that the movable connecting base 45 can rotate around the hinged shaft.

The movable connecting base 45 can be mounted vertically with the bottom plate being arranged roughly horizontally and the two hinged plates being roughly perpendicular to the first connecting rod 432 of the linkage mechanism 43. The movable connecting base 45 is hinged to the second end of the first connecting rod 432 via the bottom plate. The first end of the push rod 433 is provided with a connecting end and is located between two hinged plates, and the connecting end is arranged with a hinged shaft corresponding to the through-holes on the two hinged plates. Therefore, the movable connecting base 45 can be hinged to the push rod 433 by the hinged shaft passing through the through-holes, so that the push rod 433, the movable connecting base 45 and the linkage mechanism 43 are connected to each other. In this way, with the movable connecting base 45, motion of the first connecting rod 432 can be decomposed into two subsystems, which are the movable connecting base 45 and the linkage mechanism 43. Even if the first connecting rod 432 is performing a complex motion, the movable connecting base 45 can maintain a relatively stable motion state and is not affected by the first connecting rod 432, which improves the accuracy and efficiency of the linkage mechanism 43.

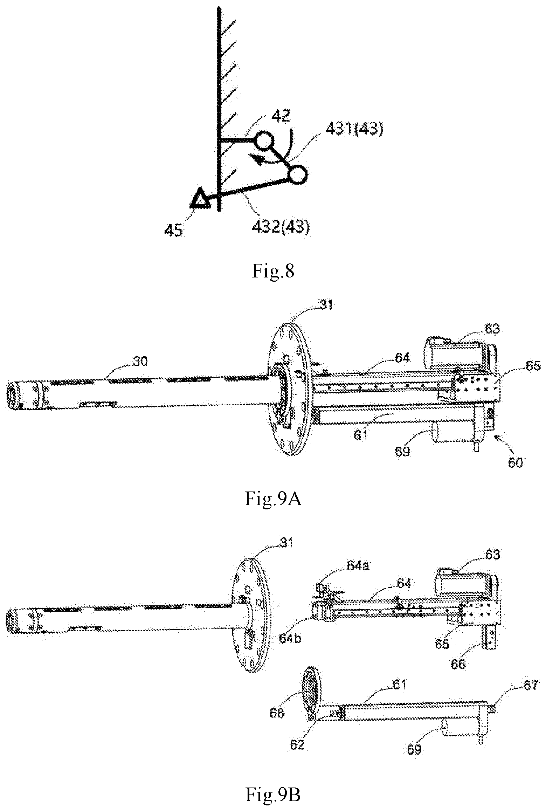

As shown in Fig. 8, specifically, the rotational torque output by the driving unit 41 will be transferred to the swing rod 431 connected thereto, and the swing rod 431 will start to rotate around its hinged point under the action of the rotational torque. At this time, the other end of the swing rod 431 also will move along with it, and transfer energy to the first connecting rod 432 hinged to the swing rod 431. After receiving the energy, the first connecting rod 432 starts to move in a straight line motion manner and transfers the energy to the movable connecting base 45; the movable connecting base 45 maintains a relatively stable motion state and transfers the energy to the push rod 433, and then the energy is transferred to a mechanism being driven via the push rod 433, to ensure the accuracy and efficiency of the linkage mechanism 43.

### Embodiment 3

The embodiment of the present application provides a handling and feeding vehicle including a vehicle body and a cantilever shaft assembly 100; the assembly body of the cantilever shaft assembly 100 is arranged on the vehicle body; wherein, the cantilever shaft assembly 100 is the cantilever shaft assembly 100 described in any of the preceding embodiments.

The handling and feeding vehicle provided by the embodiment of the present application includes the vehicle body, and can be flexibly moved according to the need to adapt to different handling scenarios. As described in the preceding embodiments, the cantilever shaft assembly 100 has a good load-bearing performance and strength, and can bear the mass of material suspended from the cantilever shaft assembly 100. When the material is carried on the cantilever shaft, the cantilever shaft assembly 100 can effectively balance the bending of the cantilever shaft caused by the load and make the cantilever shaft assembly 100 directly dock with the docking machine station of the target apparatus, thereby improving the efficiency of material handling.

Finally, the material pushing mechanism in the embodiment of the present application will be illustrated in detail.

As shown in Figs. 1 to 3 and Figs. 9a and 9b, in an embodiment, a material pushing mechanism 60 includes a material pushing rod 62, a push rod base 61, a sliding motor 63, a guide rail 64, a sliding block 65, a connecting plate 66, a hinged point 67, a material pushing ring 68, and a material pushing rod driving unit 69.

An end of the guide rail 64 is fixedly connected to the cantilever shaft flange 31 through a first connecting flange 64a and a second connecting flange 64b, and the other end of the guide rail 64 is connected to the sliding block 65. The sliding block 65 is further connected to the sliding motor 63. The sliding motor 63 drives the sliding block 65 to slide along the guide rail 64. The sliding motor 63 receives electrical energy through a cable and transforms the electrical energy into mechanical energy. The cable is located within a drag chain of a drag chain mechanism 70. The drag chain guides and protects the cable, and drives the cable to move with the sliding block 65 and the sliding motor 63.

As shown in Fig. 9b, a side of the sliding block 65 facing the push rod base 61 is arranged with the connecting plate 66, and the push rod base 61 is arranged with a hinged point 67. The connecting plate 66 is hinged to the hinged point 67 so that the push rod base 61 can rotate around the sliding block 65. The material pushing rod 62 is arranged within the push rod base 61. An end of the material pushing rod 62 is connected to the push rod base 61, and the other end of the material pushing rod 62 is connected to the material pushing ring 68.

The material pushing rod driving unit 69 is arranged at the push rod base 61. The material pushing rod driving unit 69 is further connected to the material pushing rod 62, and the material pushing rod driving unit 69 is configured to provide a driving force to the material pushing rod 62. The material pushing ring 68 is sheathed on the cantilever shaft 30, and the material pushing rod 62 passes through the through-hole of the cantilever shaft flange 31 and is fixedly connected to the material pushing ring 68, and can slide along the cantilever shaft 30. The material pushing rod driving unit 69 can be a cylinder or a hydraulic cylinder. The material pushing rod 62 can be a telescopic rod.

In the following, the operating principle of the material pushing mechanism 60 is illustrated in combination with Figs. 1 to 3, 9a and 9b. When the material pushing mechanism 60 pushes the material tray which acts as the material, suspended from the cantilever shaft 30, the sliding motor 63 drives the sliding block 65 to slide along the guide rail 64, and the sliding block 65 drives the push rod base 61 to move toward the docking machine station 300. After the push rod base 61 reaches the specified position, the material pushing rod driving unit 69 drives the material pushing rod 62 to move towards the docking machine station 300, and the material pushing rod 62 pushes the material tray into the docking machine station 300 using the material pushing ring 68. When the angle of the cantilever shaft 30 is adjusted by tilting, the material pushing rod 62 and the push rod base 61 rotate around the sliding block 65 and tilt synchronously.

The above are only better embodiments of the present application and are not used to restrict the present application. Any modification, equivalent replacement, improvement, etc. made within the spirit and principle of the present application shall be included in the scope of protection of the present application.

## Claims

1. A cantilever shaft assembly, comprising an assembly body, a swing plate, a cantilever shaft and a pitch adjustment mechanism;
a top end of the swing plate is hinged to the assembly body;
the cantilever shaft is perpendicular to the swing plate, and an end of the cantilever shaft is fixed on the swing plate;
the pitch adjustment mechanism comprises a driving unit, a linkage mechanism and a push rod; the driving unit is arranged on the assembly body, a first end of the linkage mechanism is connected to the driving unit, a second end of the linkage mechanism is hinged to a first end of the push rod, and a second end of the push rod is configured to push the swing plate to swing relative to a vertical state.

2. The cantilever shaft assembly according to claim 1, wherein the assembly body comprises a mounting plate, and the top end of the swing plate is hinged to the mounting plate.

3. The cantilever shaft assembly according to claim 1, wherein the linkage mechanism comprises a swing rod and a first connecting rod;
a first end of the swing rod is connected to the driving unit, a second end of the swing rod is hinged to a first end of the first connecting rod, and a second end of the first connecting rod is hinged to the first end of the push rod.

4. The cantilever shaft assembly according to claim 1, wherein the linkage mechanism comprises a swing rod, a first connecting rod and a movable connecting base;
a first end of the swing rod is connected to the driving unit, a second end of the swing rod is hinged to a first end of the first connecting rod, the first connecting rod is perpendicular to the movable connecting base, and a second end of the first connecting rod is hinged to a first end of the movable connecting base, a second end of the movable connecting base is hinged to the first end of the push rod.

5. The cantilever shaft assembly according to claim 1, wherein a swing range of the swing plate relative to the vertical state is determined by a size of a material, a weight of a material and a length of the cantilever shaft.

6. The cantilever shaft assembly according to claim 5, wherein the swing range of the swing plate relative to the vertical state is -5° to 6°; preferably, the swing range of the swing plate relative to the vertical state is -3° to 3°.

7. The cantilever shaft assembly according to claim 2, wherein a swing limit mechanism of the swing plate is arranged between the swing plate and the mounting plate.

8. The cantilever shaft assembly according to claim 7, wherein the swing limit mechanism comprises a limit rod and a first limit member;
a first end of the limit rod is connected to the swing plate, and a second end of the limit rod is connected to the first limit member after passing through a through-hole on the mounting plate.

9. The cantilever shaft assembly according to claim 8, wherein the swing limit mechanism further comprises a second limit member which is arranged on the limit rod;
the second limit member and the first limit member are respectively located at both sides of the mounting plate, and there is a preset limit distance between the second limit member and the first limit member.

10. The cantilever shaft assembly according to claim 2, wherein the pitch adjustment mechanism further comprises an inclination sensor and a control unit;
the inclination sensor is arranged on the cantilever shaft and located at an end of the cantilever shaft away from the mounting plate, the inclination sensor is electrically connected to the control unit, and the control unit is electrically connected to the driving unit.

11. The cantilever shaft assembly according to claim 1, wherein the driving unit comprises a motor and a reducer which are provided integrally, the motor is connected to the reducer, and the first end of the linkage mechanism is connected to an output shaft of the reducer.

12. The cantilever shaft assembly according to claim 2, wherein the assembly body further comprises a material pushing mechanism for pushing a material suspended from the cantilever shaft.

13. A handling and feeding vehicle, comprising a vehicle body and a cantilever shaft assembly; wherein an assembly body of the cantilever shaft assembly is arranged on the vehicle body; wherein the cantilever shaft assembly is the cantilever shaft assembly claimed in any of the preceding claims 1-12.
